# EUROPEAN PATENT APPLICATION

(11) **EP 4 163 989 A1**
(43) Date of publication of application: **12.04.2023**
(21) Application number: 22164608.6
(22) Date of filing: 28.03.2022
(51) Int. Cl.: H01M 4/04, H01M 4/13, H01M 4/139, H01M 4/36, H01M 4/62, H01M 10/0525, H01M 10/42, H01M 50/403, H01M 50/414, H01M 50/42, H01M 50/423, H01M 50/426, H01M 50/443, H01M 50/449, H01M 4/133, H01M 4/134, H01M 4/1393, H01M 4/1395, H01M 4/38, H01M 4/587, H01M 4/02, H01M 10/0562, H01M 10/0565

(54) **NANOCOMPOSITE LAYER, METHOD OF FORMING NANOCOMPOSITE LAYER AND BATTERY**

(30) Priority: 07.10.2021 TW 110137399
(71) Applicant: SolidEdge Solution Inc., 300094 Hsinchu City (TW); Hon Hai Precision Industry Co., Ltd., 236038 New Taipei City (TW)
(72) Inventor: CHEN, Wei-Chao, 300094 Hsinchu City (TW); LAI, Hong-Zheng, 300094 Hsinchu City (TW); CHANG, Tseng-Lung, 300094 Hsinchu City (TW)
(74) Representative: Winter, Brandl - Partnerschaft mbB

(57) **Abstract**

A nanocomposite layer includes a carbon nanotube composite material and a lithium salt polymer composite. The carbon nanotube composite material includes a surface modified carbon nanotube with a positively charged group and a plurality of nanoparticles with a negatively charged group. The plurality of nanoparticles are attached to the surface modified carbon nanotube. The lithium salt polymer composite wraps the carbon nanotube composite material, and includes a first polymer, a second polymer, and a lithium salt.

## Description

### BACKGROUND

### Field of Invention

The present invention relates to a nanocomposite layer, a method of forming nanocomposite layer and a battery. More particularly, the nanocomposite layer can be applied to batteries and is disposed on the negative electrode of the battery.

### Description of Related Art

Lithium-ion batteries have been widely used in electronic devices such as mobile phones and laptops. Currently, lithium-ion batteries are also used in electric vehicles as their power source. A lithium-ion battery is usually composed of a positive electrode, a negative electrode, and an electrolyte. The positive electrode, which is also called as cathode, undergoes a reduction reaction during discharge to reduce conductive ions (e.g., Li⁺) to uncharged atoms (e.g., Li). The negative electrode, which is also called as anode, undergoes an oxidation reaction during discharge.

However, there are still many problems to overcome with lithium-ion batteries. For example, the uneven deposition of the lithium ions after repeated charging and discharging causes formation of dendrites on the surface of the negative electrode. The penetration of dendrites through the electrode separator will lead to short circuit and cause safety hazards such as thermal failure and fire of the battery. Therefore, the development direction of lithium-ion battery is to improve the energy density and safety of the battery.

### SUMMARY

According to an aspect of the present disclosure, a nanocomposite layer for battery is provided. The nanocomposite layer includes a carbon nanotube composite material and a lithium salt polymer composite. The carbon nanotube composite material includes a surface-modified carbon nanotube with a positively charged group and a plurality of nanoparticles with a negatively charged group, wherein the plurality of nanoparticles is attached to the surface-modified carbon nanotube. The lithium salt polymer composite wraps the carbon nanotube composite material. The lithium salt polymer composite includes a first polymer, a second polymer, and a lithium salt, in which the first polymer is a piezoelectric polymer, the second polymer is a doping molecule that is miscible with the first polymer, and the second polymer is configured to change the crystal structure of the first polymer.

According to some embodiments of the present disclosure, a surface of the surface-modified carbon nanotube has an amido group.

According to some embodiments of the present disclosure, the plurality of nanoparticles includes silver nanoparticles, gold nanoparticles, aluminum nanoparticles, aluminum oxide nanoparticles, or combinations thereof.

According to some embodiments of the present disclosure, the plurality of nanoparticles has an average particle size of about 10 nm to 120 nm.

According to some embodiments of the present disclosure, the piezoelectric polymer includes polyvinylidene difluoride, polydimethylsiloxane, polyimide, polyvinyl acetate, or combinations thereof, and the doping molecule includes poly(methyl methacrylate) (PMMA), poly(γ-benzyl-L-glutamate), 4,4-oxydiphthalic anhydride, or a ceramic perovskite material in combination with any of the above material.

According to another aspect of the present disclosure, there is provided a battery including a negative electrode current collector, a negative electrode disposed on the negative electrode current collector, a nanocomposite layer disposed on the negative electrode, a solid-state electrolyte disposed on the nanocomposite layer, a positive electrode disposed on the solid-state electrolyte, and a positive electrode current collector disposed on the positive electrode.

According to some embodiments of the present disclosure, the nanocomposite layer has a thickness of about 25 microns to 50 microns.

According to another aspect of the present disclosure, an anode-fee battery is provided. The anode-free battery includes a negative electrode current collector, a nanocomposite layer disposed on the negative electrode current collector, a solid-state electrolyte disposed on the nanocomposite layer, a positive electrode disposed on the solid-state electrolyte, and a positive electrode current collector disposed on the positive electrode.

According to another aspect of the present disclosure, there is provided a method of forming a nanocomposite layer including mixing a carbon nanotube composite material with an organic solvent, a first polymer, a second polymer, and a lithium salt to form a nanocomposite gel and baking the nanocomposite gel. The carbon nanotube composite material includes a surface-modified carbon nanotube with a positively charged group and a plurality of nanoparticles with a negatively charged group, and the plurality of nanoparticles are attached to the surface-modified carbon nanotube. The first polymer is a piezoelectric polymer, the second polymer is a doping molecule that is miscible with the first polymer, and the second polymer is configured to change the crystal structure of the first polymer.

According to some embodiments of the present disclosure, the method further includes forming the carbon nanotube composite material, including performing a surface treatment to the carbon nanotube to form the surface-modified carbon nanotube with a positively charged group; mixing the surface-modified carbon nanotube with an aqueous solution of nanoparticles to form a mixture; and drying the mixture.

According to some embodiments of the present disclosure, the nanocomposite gel includes from about 10 wt% to about 20 wt% of a first polymer, from about 1.5 wt% to about 3 wt% of a second polymer, and from about 5 wt% to about 20 wt% of a lithium salt.

It is to be understood that both the foregoing general description and the following detailed description are by examples and are intended to provide further explanation of the invention as claimed.

### BRIEF DESCRIPTION OF THE DRAWINGS

Fig. 1 is a flowchart illustrating a method of forming a nanocomposite layer according to some embodiments of this disclosure.
Fig. 2 is a schematic diagram illustrating a carbon nanotube composite material according to some embodiments of this disclosure.
Fig. 3 is a schematic diagram illustrating the structure a nanocomposite layer according to some embodiments of this disclosure.
Fig. 4 is a cross-sectional view illustrating a battery according to some embodiments of this disclosure.
Fig. 5 is a cross-sectional view illustrating an anode-free half-cell having a nanocomposite layer according to one of the examples of this disclosure.
Fig. 6 is a potential-time curve diagram of an anode-free half-cell having a nanocomposite layer according to one of the examples of this disclosure.
Fig. 7 is a potential-time curve diagram of an anode-free half-cell without a nanocomposite layer according to a comparative example of this disclosure.

### DETAILED DESCRIPTION

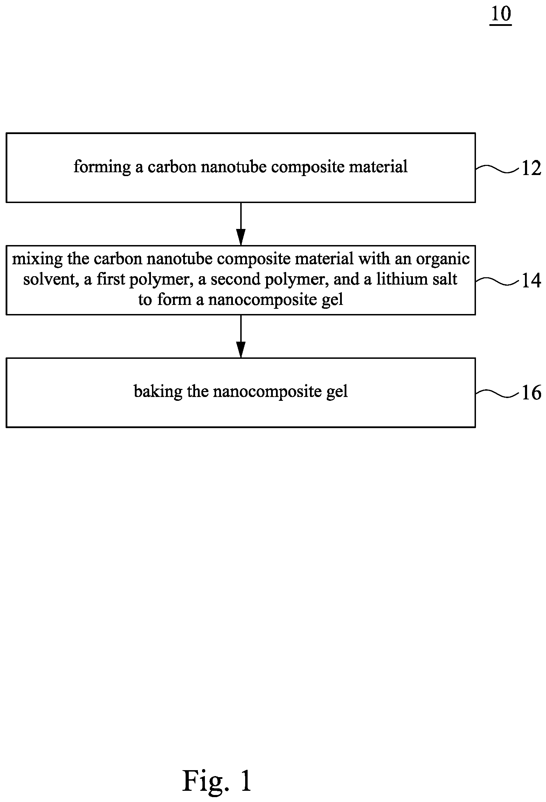

Fig. 1 is a flowchart illustrating a method of forming a nanocomposite layer according to some embodiments of this disclosure. As shown in Fig. 1, the method 10 includes operation 12, operation 14, and operation 16.

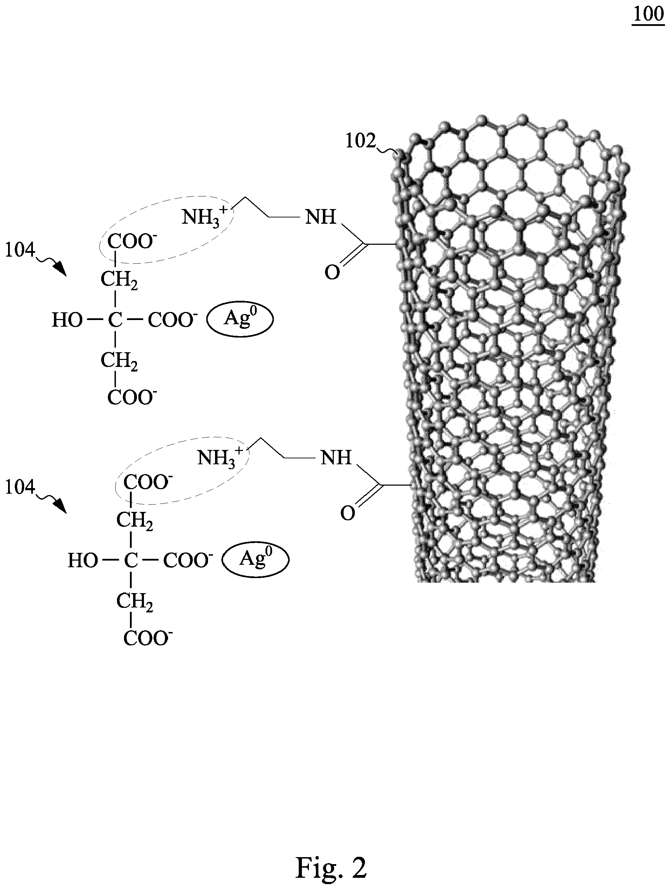

Referring to Fig. 1 and Fig. 2, in operation 12 of method 10, a carbon nanotube composite material 100 is formed. As shown in Fig. 2, the carbon nanotube composite material 100 includes a surface-modified carbon nanotube 102 with a positively charged group and a plurality of the nanoparticles 104 with a negatively charged group, and the plurality of the nanoparticles 104 are attached to the surface-modified carbon nanotube 102. Specifically, the surface-modified carbon nanotube 102 forms covalent bonds with the nanoparticles 104.

In some embodiments, forming the carbon nanotube composite material 100 may include following operations. First, the carbon nanotube (not shown) is surface-treated to form the surface-modified carbon nanotube 102. In some embodiments, the surface treatment includes a carboxylation, an acyl chlorination, and an amidation of the carbon nanotube. For example, after carboxylation, the carbon nanotube has a -COOH group on its surface after carboxylation. Then, after acyl chlorination, the -COOH group is replaced with -COCI group. Then, after the amidation, the -CI group of the -COCI group of the surface of the nanotube is replaced with -NH(CH₂)₂-NH₃⁺ group. The nanotube may have a positively charged group on its surface after multi-step functionalization. In some embodiments, the surface of the surface-modified carbon nanotube 102 has an amido group. In some embodiments, the surface-modified carbon nanotube 102 may be directly generated by reacting the carboxylated carbon nanotube with ethylenediamine at high temperature (>350°C) and high pressure (>6MPa). In other embodiments, the carbon nanotube is plasma-treated, for example, with hydrogen-oxygen plasma to generate a -COOH group on the surface of the carbon nanotube, which are then treated with ammonia plasma to generate a positively charged NH₃ group.

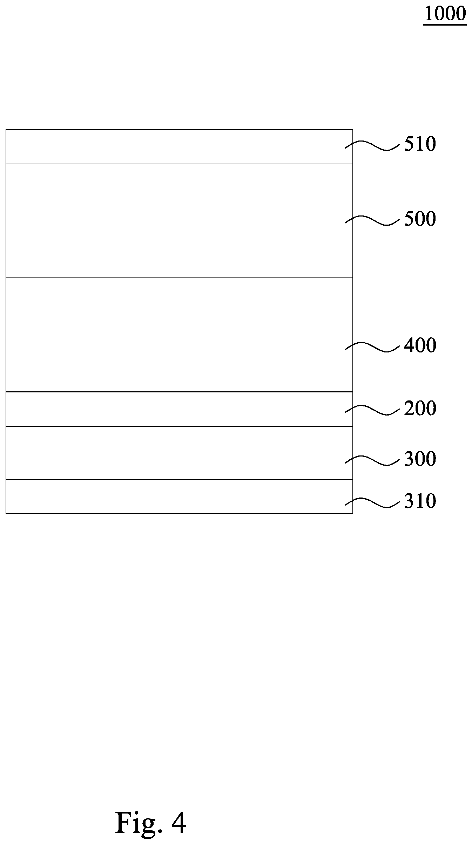

In some embodiments, the surface-modified carbon nanotube 102 includes a multi-walled carbon nanotube (MWCNT), a double-walled carbon nanotube (DWCNT), a single-walled carbon nanotube (SWCNT), or combinations thereof. In some embodiments, the surface-modified carbon nanotube 102 has a length of about 5 microns to 15 microns. The carbon nanotube with a length greater than 15 µm is not readily available, while the carbon nanotube with a length less than 5 µm loses continuity and increase in impedance when the resulting nanocomposite layer is subsequently applied to a battery (the nanocomposite layer 200 as shown in Fig. 4).

Afterwards, the surface-modified carbon nanotube 102 may be mixed with the aqueous solution of nanoparticles 104 to form a mixture. In some embodiments, an ultrasonic oscillator may be used to mix the powdered surface-modified carbon nanotube 102 with the aqueous solution of nanoparticle 104. In some embodiments, the nanoparticles 104 are lithiophilic. In some examples, the nanoparticles 104 include silver nanoparticles, gold nanoparticles, aluminum nanoparticles, aluminum oxide nanoparticles, or combinations thereof. In some embodiments, the nanoparticles 104 are formed by chemical reductions by agents. In some examples, the nanoparticles 104 may be formed by reducing metal ions with a reducing agent. For example, the nanoparticles 104 may be silver citrate nanoparticles as shown in Fig. 2. The surface of the nanoparticles of this structure is slightly negatively charged (5-15 mV). The silver citrate nanoparticles are formed by reducing the silver ions in the aqueous silver nitrate solution with sodium citrate, which form chemical bonds to wrap the citric acid molecules around the silver atomic groups. In other embodiments, sodium citrate can be replaced by sodium borohydride, formate, and sodium hydroxide mixed solution as reducing agents. In some embodiments, the plurality of the nanoparticles 104 has an average particle size of about 10 nm to 120 nm. If the particle size of the nanoparticles 104 is greater than 120nm, the nanoparticles 104 tend to agglomerate during the synthesis process and do not easily attach to the surface-modified carbon nanotubes 102 strongly to form covalent bonds. When the resulting nanocomposite layer is applied to the battery, it will affect the stability of the silver particles during charging and discharging the battery. If the particle size of the nanoparticles 104 is less than 10 nm, it represents that the silver nitrate has not been fully reduced to silver nanoparticles. In some embodiments, the weight ratio of the surface-modified carbon nanotube 102 to the aqueous solution of nanoparticles 104 is about 1:10 to about 1:20.

The above mixture is then dried. In some embodiments, the mixture may be oven-dried to form a powder. Afterwards, the above powder is dissolved in an organic solvent and then stirred and crushed by an emulsifier to form the carbon nanotube composite material 100. It should be appreciated that, for ease of understanding, the carbon nanotube composite material 100 shown in Fig. 2 is illustrated as negatively charged silver citrate nanoparticles 104 attached to the surface of the surface-modified carbon nanotube 102 with a positively charged amido group, but the present invention is not limited thereto.

Referring further to Fig. 1, in operation 14 of method 10, the carbon nanotube composite material 100 is mixed with an organic solvent, a first polymer, a second polymer, and a lithium salt to form a nanocomposite gel. In some embodiments, the carbon nanotube composite material 100 may be mixed with the organic solvent, the first polymer, and the second polymer before mixing with the lithium salt. The nanocomposite gel can be coated on suitable substrate (e.g., the negative electrode of a battery).

In some embodiments, the organic solvent includes N-methyl-2-pyrrolidone (NMP), ethylene carbonate (EC), polycarbonate (PC), dimethyl carbonate (DMC), dimethyl acetamide (DMAC), diethyl carbonate (DEC), or combinations thereof.

In some embodiments, the first polymer is a piezoelectric polymer that has a high dipole moment and is prone to forming crystals in a chain structure. In some embodiments, the first polymer is a piezoelectric polymer comprising polyvinylidene difluoride (PVDF), polydimethylsiloxane (PDMS), polyimide (PI), polyvinyl acetate (PVA), or combinations thereof. In some embodiments, the nanocomposite gel includes from about 10 wt% to about 20 wt% of the first polymer. When the content of the first polymer is too high, the viscosity of the nanocomposite gel is too low, which affects the subsequent film formation of the resulting nanocomposite layer.

In some embodiments, the second polymer is a doping molecule that increases the mechanical strength of the first polymer, changes the viscosity of the first polymer, or increases the piezoelectric properties of the first polymer, and is miscible with the first polymer. The crystal structure of the first polymer can be changed by controlling the doping amount and type of the second polymer. In some embodiments, the second polymer is a doping molecule comprising poly(methyl methacrylate) (PMMA), poly(γ-benzyl-L-glutamate), 4,4'-oxydiphthalic anhydride, or a ceramic perovskite material in combination with any of the above material. In some embodiments, the nanocomposite gel includes from about 1.5 wt% to about 3 wt% of the second polymer. When the content of the second polymer is too high, the dipole-dipole force between the second polymer and the first polymer is greater, making viscosity of the nanocomposite gel too high, causing the nanocomposite gel to be difficult to spread, and the resulting coating layer is fragile and loses its protective effect due to excessive stress.

The first polymer and the second polymer can improve the surface coating of the carbon nanotube, thereby reducing the agglomeration phenomenon. In addition, the first polymer and the second polymer can regulate the viscosity of the nanocomposite gel. Specifically, when the surface-modified carbon nanotube 102 is covalently bonded with the nanoparticles 104, the overall structure will remain electrically neutral and lose the electric double-layer dispersion characteristics of the surface-modified carbon nanotube 102 due to its positive charge. Therefore, whether the polymer is well coated or not affects the overall dispersion characteristic of the nanocomposite gel. If the dispersion is poor, the viscosity is too low and the resulting nanocomposite layer loses its protective properties. If the viscosity is too high, the nanocomposite gel is difficult to be coated. Therefore, the coating properties of the polymer on the carbon nanotube composite material 100 and the viscosity of the nanocomposite gel have a great influence on the application of the nanocomposite layer.

In some embodiments, the lithium salt includes lithium bis(trifluoromethanesulfonyl)imide (LiTFSI), lithium bis(oxalate)borate (LiBOB), lithium tetrafluoroborate (LiBF₄), lithium difluoro(oxalate)borate (LiODFB), lithium bis(fluorosulfonyl)imide (LiFSI), lithium difluorophosphate (LiPO₂F₂), lithium tetrafluoro(oxalato)phosphate (LiFOP), or combinations thereof. In some embodiments, the nanocomposite gel includes from about 5 wt% to about 20 wt% of the lithium salt. The lithium salt increases the lithium ion conductivity of the nanocomposite gel, aids in lithium ion transport, and allows for a dynamic equilibrium with adjacent metal nanoparticles in intermetallic reaction.

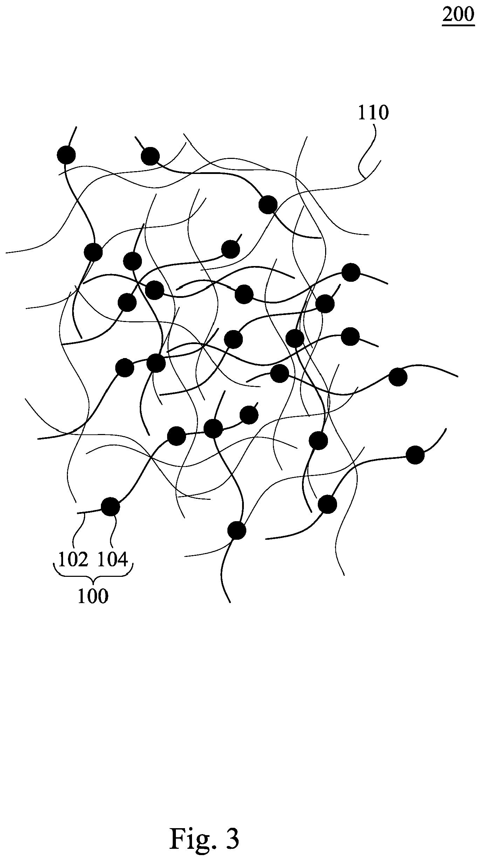

Referring to Fig. 1, in operation 16 of method 10, the nanocomposite gel is baked. In some embodiments, after the nanocomposite gel is coated on a substrate, the nanocomposite gel is baked at 120 - 150 °C to dry the organic solvent to form the nanocomposite layer 200 shown in Fig. 3. In some embodiments, the nanocomposite layer 200 may be applied to battery. For example, the nanocomposite layer 200 may be formed on a negative electrode of the battery, as described in detail in the subsequent Fig. 4.

Fig. 3 is a schematic diagram illustrating the structure of nanocomposite layer 200 according to some embodiments of this disclosure. As shown in Fig. 3, the nanocomposite layer 200 includes the carbon nanotube composite material 100 and the lithium salt polymer composite 110.

The carbon nanotube composite material 100 includes a surface-modified carbon nanotube 102 with a positively charged group and a plurality of the nanoparticles 104 with a negatively charged group, in which a plurality of the nanoparticles 104 are attached to the surface-modified carbon nanotube 102. The carbon nanotube composite material 100 may be any of the carbon nanotube composite material 100 described above, and will not be repeated herein.

The lithium salt polymer composite 110 wraps the carbon nanotube composite material 100. In some embodiments, the lithium salt polymer composite 110 includes a first polymer, a second polymer, and a lithium salt. Specifically, the first polymer and the second polymer as described above may form a complex with the lithium salt. Examples of the first polymer, the second polymer, and the lithium salt may be any of the examples described above, and will not be repeated herein.

Another aspect of this disclosure is a battery. Fig. 4 is a cross-sectional view illustrating a battery 1000 according to some embodiments of this disclosure. As shown in Fig.4, the battery 1000 includes a negative electrode current collector 310, a negative electrode 300, a nanocomposite layer 200, a solid-state electrolyte 400, a positive electrode 500, and a positive electrode current collector 510. In some embodiments, the battery 1000 may be a lithium-ion battery. For example, the battery 1000 may be a lithium cobalt oxide (LCO) battery, a lithium nickel cobalt manganese (NCM) battery, a lithium iron phosphate (LFP) battery, a lithium cobalt binary battery/ternary battery, or the like.

In some embodiments, the negative electrode current collector 310 may be any suitable material, such as copper foil. The negative electrode 300 is disposed on the negative electrode current collector 310. In some embodiments, the negative electrode 300 includes any suitable material, such as lithium metal, graphite, and silicon-carbon material. In some embodiments, the negative electrode 300 can be omitted.

The nanocomposite layer 200 is disposed between the negative electrode 300 and the solid-state electrolyte 400. The nanocomposite layer 200 may be formed by drying the aforementioned nanocomposite gel. The nanocomposite layer 200 includes a carbon nanotube composite material 100 and a lithium salt polymer composite 110. The nanocomposite layer 200 can be any of the nanocomposite layer 200 as described above. In some embodiments, the battery is a battery without negative electrode (i.e., anode-free battery), and the nanocomposite layer 200 is disposed on the negative electrode current collector 310.

The carbon nanotube composite material 100 includes the surface-modified carbon nanotube 102 with a positively charged group and a plurality of the nanoparticles 104 with a negatively charged group, and the plurality of the nanoparticles 104 are attached to the surface-modified carbon nanotube 102, as shown in Fig. 2. The covalent bond formed between the surface-modified carbon nanotube 102 and the nanoparticles 104 provide a very strong attraction to each other. When the lithium ions are intercalated and disintercalated during charging and discharging of the battery 1000, the metal nanoparticles 104 are interfused with the lithium ions to form an intermetallic compound, resulting in volume changes. The force between the surface-modified carbon nanotube 102 and the metal nanoparticles 104 can stabilize the metal nanoparticles 104 (e.g., silver particles shown in Fig. 2), and reduce the silver nanoparticles from detaching from the surface-modified carbon nanotube 102 and agglomerating to become ineffective particles. In addition, the surface-modified carbon nanotube 102 may also improve the conductivity of the nanocomposite layer 200. The carbon nanotube composite material 100 can be used to homogenize the rate and concentration of lithium ions as they transfer between the positive electrode 500 and the negative electrode 300.

The lithium salt polymer composite 110 includes a first polymer, a second polymer, and a lithium salt, as described above. By mixing the lithium ions of the lithium salt with the metal nanoparticles 104, the lithium ions can be induced to from an intermetallic compound with the metal nanoparticles 104 during the transfer at the interface of the negative electrode 300 to achieve a dynamic equilibrium of the lithium ions.

The nanocomposite layer 200 formed on the negative electrode 300 of the battery 1000 can effectively improve the lithium ion conductivity, the cycling performance of the cell under large discharge rate, and suppress the formation of lithium dendrites. In some embodiments, the nanocomposite layer 200 has a thickness of about 25 µm to about 50 µm. If the thickness of the nanocomposite layer 200 is greater than 50 µm, it will increase the component impedance. If the thickness of the nanocomposite layer 200 is less than 25 µm, it is prone to losing the protective effect on negative electrodes due to uneven coating.

Referring further to Fig. 4, the solid-state electrolyte 400 is disposed on the nanocomposite layer 200. In some embodiments, the solid-state electrolyte 400 includes any suitable solid-state electrolyte material. The positive electrode 500 is disposed on the solid-state electrolyte 400. In some embodiments, the positive electrode 500 includes any suitable positive electrode material. The positive electrode current collector 510 is disposed on the positive electrode 500. In some embodiments, the positive electrode current collector 510 includes any suitable material, such as aluminum foil.

The following examples are intended to detail particular aspects of the present disclosure and to enable those having ordinary skill in the art to implement the present disclosure. However, the following examples should not be used to limit the present disclosure.

### Example 1: Anode-free half-cell with a nanocomposite layer

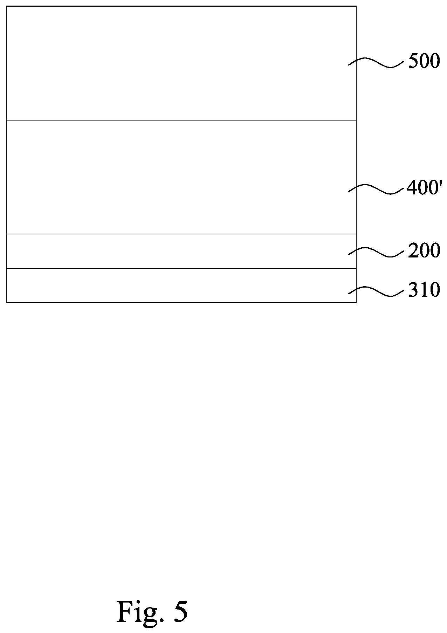

Fig. 5 is a cross-sectional view illustrating an anode-free half-cell 2000 having a nanocomposite layer according to some embodiments of this disclosure. As shown in Fig. 5, the anode-free half-cell 2000 includes a negative electrode current collector 310 (i.e., anode current collector), a nanocomposite layer 200, a separator 400', and a positive electrode 500 (i.e., cathode).

The negative electrode current collector 310 was a copper foil with a thickness of about 8 µm. The nanocomposite layer 200 was manufactured by the above method and has a thickness of about 15 µm. The nanocomposite layer 200 was composed of 0.2 wt% carbon nanotube composite material as shown in Fig. 2 and a lithium salt polymer composite containing 11.5 wt% polyvinylidene difluoride, 1.6 wt% poly(methyl methacrylate) and 8.2 %wt lithium bis(trifluoromethanesulfonyl)imide. The separator 400' was from W-Scope Corporation andhad a thickness of about 20 µm. The positive electrode 500 was lithium metal with a thickness of about 200 µm. The anode-free half-cell was validated using a liquid electrolyte (not shown in the figure).

### Comparative Example 1: Anode-free half-cell without nanocomposite layer

The structure of the half-cell of the Comparative Example 1 was similar to the anode-free half-cell 2000 of Example 1, with the difference that the half-cell of the Comparative Example 1 did not have a nanocomposite layer 200.

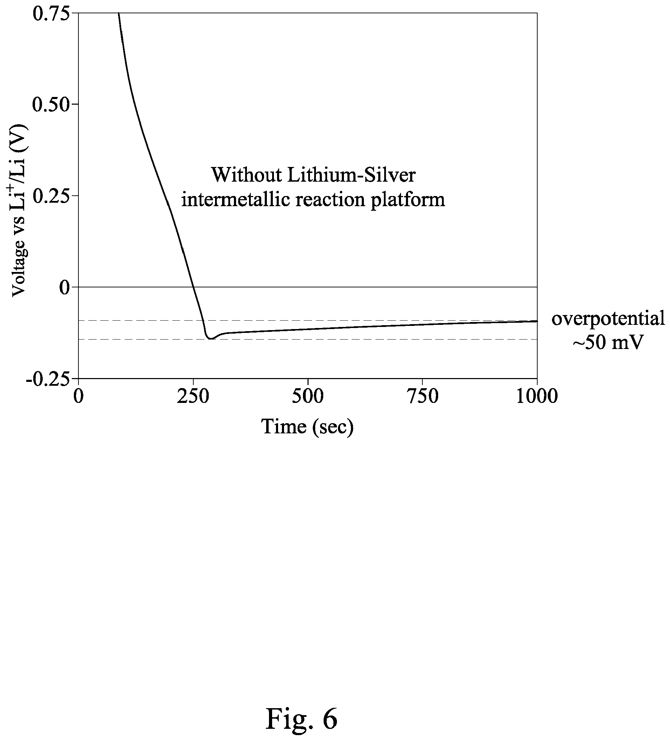

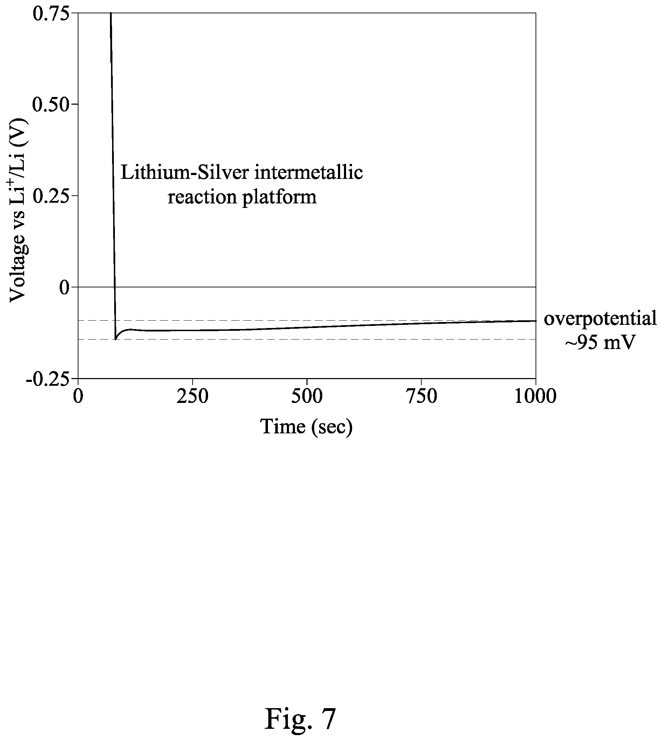

The half-cells of Example 1 and Comparative Example 1 were subjected to electroplating test at a current density of 0.5 mA / cm² to evaluate the cell characteristics when the nanocomposite layer was used in the cell, and the results are shown in Fig. 6 and Fig. 7, respectively. During electroplating, the lithium ions transferred from the lithium metal positive electrode 500 to the copper negative electrode current collector 310, and deposited on the surface of the copper negative electrode current collector 310. At this time, a significant drop in potential can be observed. As shown in Fig. 6, the silver ions in the nanocomposite layer 200 of the Example 1 can react with the lithium ions at the interface of the negative electrode current collector 310 to form an intermetallic compound. The Comparative Example 1 shown in Fig. 7 does not have the nanocomposite layer 200 and therefore no intermetallic reaction occurs at the interface.

The electroplating process may include ion passage, electrolyte diffusion, charge transfer, atomic surface adsorption, surface diffusion, crystal grain nucleation, and grain growth. There is a significant and quantifiable activation energy (at voltage below 0 volts) in grain nucleation and grain growth, which is called overpotential. The smaller the overpotential, the more uniform the electroplating deposited layer is and the more it tends to grow in two dimensions *(i.e.,* a film), while the larger the overpotential, the more it tends to grow in one dimension and the easier it is to form lithium dendrites. Referring to Fig. 6 and Fig. 7, the overpotential of Example 1 is about 50 mV and the overpotential of the Comparative Example 1 is about 95 mV. Therefore, Example 1 having the nanocomposite layer 200 can form a thin film with a more uniform thickness, instead of lithium dendrites.

As described above, according to the embodiments of the present disclosure, there is provided a nanocomposite layer, a method of forming the same, and a battery including the nanocomposite layer. The nanocomposite layer is disposed between the negative electrode and the solid-state electrolyte of the battery. The nanocomposite layer of the present disclosure is formed by drying a nanocomposite gel containing a carbon nanotube composite material, an organic solvent, a first polymer, a second polymer, and a lithium salt. The carbon nanotube composite material includes a surface-modified carbon nanotube with a positively charged group and a plurality of nanoparticles with a negatively charged group. The nanoparticles and the surface-modified carbon nanotube are covalently bonded to each other and have a strong attraction therebetween. Therefore, the nanoparticles have good stability under the large discharge rate of the cell, which can prevent the nanoparticles from detaching from the surface-modified carbon nanotubes. In addition, the nanocomposite layer can effectively improve the lithium ion conductivity, the cycling performance of the cell under large discharge rate, and suppress the formation of lithium dendrites.

## Claims

1. A nanocomposite layer (200) for battery (1000), **characterized by** comprising:
a carbon nanotube composite material (100) comprising a surface-modified carbon nanotube (102) with a positively charged group and a plurality of nanoparticles (104) with a negatively charged group, wherein the plurality of nanoparticles (104) are attached to the surface-modified carbon nanotube (102); and
a lithium salt polymer composite (110) wrapping the carbon nanotube composite material (100), wherein the lithium salt polymer composite (110) comprises a first polymer, a second polymer, and a lithium salt, wherein the first polymer is a piezoelectric polymer, the second polymer is a doping molecule that is miscible with the first polymer, and the second polymer is configured to change a crystal structure of the first polymer.

2. The nanocomposite layer (200) of claim 1, **characterized in that** a surface of the surface-modified carbon nanotube (102) has an amido group.

3. The nanocomposite layer (200) of any of claims 1-2, **characterized in that** the plurality of nanoparticles (104) comprises silver nanoparticles, gold nanoparticles, aluminum nanoparticles, aluminum oxide nanoparticles, or combinations thereof.

4. The nanocomposite layer (200) of any of claims 1-3, **characterized in that** the plurality of nanoparticles (104) has an average particle size of about 10 to 120 nm.

5. The nanocomposite layer (200) of any of claims 1-4, **characterized in that** the piezoelectric polymer comprises polyvinylidene difluoride, polydimethylsiloxane, polyimide, polyvinyl acetate, or combinations thereof, and the doping molecule comprises poly(methyl methacrylate) (PMMA), poly(γ-benzyl-L-glutamate),4,4-oxydiphthalic anhydride, or a ceramic perovskite material in combination with any of the above material.

6. A battery (1000), **characterized by** comprising:
a negative electrode current collector (310);
a negative electrode (300) disposed on the negative electrode current collector (310);
the nanocomposite layer (200) of any of claims 1-5 disposed on the negative electrode (300);
a solid-state electrolyte (400) disposed on the nanocomposite layer (200);
a positive electrode (500) disposed on the solid-state electrolyte (400); and
a positive electrode current collector (510) disposed on the positive electrode (500).

7. The battery of claim 6, **characterized in that** the nanocomposite layer (200) has a thickness of about 25 microns to about 50 microns.

8. An anode-free battery, **characterized by** comprising:
a negative electrode current collector (310);
the nanocomposite layer (200) of any of claims 1-5 disposed on the negative electrode current collector (310);
a solid-state electrolyte (400) disposed on the nanocomposite layer (200);
a positive electrode (500) disposed on the solid-state electrolyte (400); and
a positive electrode current collector (510) disposed on the positive electrode (500).

9. A method of forming a nanocomposite layer (200), **characterized by** comprising:
mixing a carbon nanotube composite material (100) with an organic solvent, a first polymer, a second polymer, and a lithium salt to form a nanocomposite gel, wherein the carbon nanotube (100) composite material comprises a surface-modified carbon nanotube (102) with a positively charged group and a plurality of nanoparticles (104) with a negatively charged group, and the plurality of nanoparticles (104) are attached to the surface-modified carbon nanotube (102), wherein the first polymer is a piezoelectric polymer, the second polymer is a doping molecule that is miscible with the first polymer, and the second polymer is configured to change a crystal structure of the first polymer; and
baking the nanocomposite gel.

10. The method of claim 9, **characterized in that** further comprising forming the carbon nanotube composite material (100), which comprises:
performing a surface treatment to a carbon nanotube to form the surface-modified carbon nanotube (102) with a positively charged group;
mixing the surface-modified carbon nanotube (102) with an aqueous solution of nanoparticles (104) to form a mixture; and
drying the mixture.

11. The method of claim 9 or claim 10, **characterized in that** the nanocomposite gel comprises from about 10 wt% to about 20 wt% of the first polymer, from about 1.5 wt% to about 3 wt% of the second polymer, and from about 5 wt% to about 20 wt% of the lithium salt.
